# EUROPÄISCHE PATENTSCHRIFT

(11) **EP 1 600 045 B1**
(45) Veröffentlichungstag und Bekanntmachung des Hinweises auf die Patenterteilung: **23.04.2008**
(21) Anmeldenummer: 04712491.2
(22) Anmeldetag: 19.02.2004
(51) Int. Cl.: H05K 7/18, H02G 3/12, H02B 1/30

(54) **RAHMENGESTELL MIT EINER ELEKTRIFIZIEREINRICHTUNG**
FRAME COMPRISING AN ELECTRIFYING DEVICE
SUPPORT A DISPOSITIF D'ELECTRIFICATION

(30) Priorität: 27.02.2003 DE 10308389; 27.02.2003 DE 20318511 U
(43) Veröffentlichungstag der Anmeldung: 30.11.2005
(73) Patentinhaber: Rittal GmbH & Co. KG, 35745 Herborn (DE)
(72) Erfinder: HARTEL, Marc, 35447 Reiskirchen (DE); LAURÖSCH, Sven, 35708 Haiger (DE); DAHMER, Ralf, 57462 Olpe (DE); KREILING, Jörg, 35444 Biebertal (DE)
(74) Vertreter: Fleck, Hermann-Joseph
(86) Internationale Anmeldenummer: PCT/EP2004/001567
(87) Internationale Veröffentlichungsnummer: WO 2004/077907

(56) Entgegenhaltungen:
- AU-B- 529 226
- DE-A- 19 932 561
- FR-A- 2 589 291
- US-A- 3 949 277

## Beschreibung

Die Erfindung bezieht sich auf ein Rahmengestell für ein Rack oder einen Schaltschrank mit einer mit mindestens einem Rahmenschenkel oder Montageprofil kombinierten Elektrifiziereinrichtung zum Zuführen und/oder Abführen elektrischen Stroms daran anschließbarer Geräte.

Ein derartiges Rahmengestell ist in der DE 37 06 797 A1 angegeben. Bei diesem bekannten Rahmengestell sind hohle Vertikalträger und daran über Auslegerkanäle angeschlossene hohle Horizontalträger des gleichen Profilquerschnitts wie die Vertikalträger vorgesehen, bei dem die Hohlräume der Vertikalträger und Horizontalträger zum Führen von darin verlegten Stromkabeln möglichst viel Kabelführungsraum zur Verfügung stellen sollen. Andererseits ist gerade bei Rahmengestellen für Schaltschränke, Racks oder Arbeitsplatzsystemen für die Informationstechnik mit Tischgestellen angestrebt, die Rahmenschenkel möglichst wenig voluminös bei möglichst hoher Stabilität auszuführen und bei z.B. einem Schaltschrank den Innenraum möglichst uneingeschränkt für Einbaugeräte zu nutzen.

Die AU-B 529 226 B zeigt ein Rahmengestell eines Schaltschrankes, in dessen Rahmenschenkeln Steckkontakte für steckerartige Einsätze angeordnet sind.

Die DE 199 32 561 A betrifft eine Steckdose mit einer oder mehreren Kontaktaufnahmen für einen Stecker, wobei Anschlusseinrichtungen mit gabelförmigen Schneidklemmen vorgesehen sind.

Wie die DE 40 13 370 A1 zeigt, gibt es im Bereich der elektrischen Installationstechnik mit einer Abdeckung versehene Kabelkanäle, in denen in Längsrichtung in eine Isolierung eingebettete Stromschienen geführt sind. Auf die Anordnung sind mit den Installatiansschienen kontaktierbare Installationsgeräte aufrastbar.

Verschiedene Rahmengestelle für Schaltschränke, d.h. unter anderem auch Schränke für informationstechnische Geräte, sind in der DE 33 44 598 A1, der DE 44 39 551 A1 und der DE 196 47 814 A1 gezeigt, wobei die Rahmenschenkel hinsichtlich einfacher, vielfältiger Montagemöglichkeiten und auch Anreihung oder Abdichtung optimiert sind.

Der Erfindung liegt die Aufgabe zugrunde, ein Rahmengestell der eingangs genannten Art bereit zu stellen, das mit möglichst wenig Aufwand verbesserte Einbaumöglichkeiten für elektrisch zu versorgende Geräte bietet, und eine einfach in ein Rahmengestell zu integrierende Elektrifiziereinrichtung anzugeben.

Diese Aufgabe wird mit den Merkmalen des Anspruches 1 gelöst. Hiernach ist vorgesehen, dass die Elektrifiziereinrichtung mindestens eine separate, an einem Rahmenschenkel oder Montageprofil angebrachte Elektrifizierleiste aufweist, die aus einem hohlen, zumindest auf einer Längsseite abschnittsweise offenen Aufnahmeprofil mit in dessen mindestens einen Hohlraum berührungssicher eingebrachten Stromschienen oder Verbindungsleitungen gebildet ist, und dass in die Elektrifizierleiste eingesetzte oder einsetzbare Einsätze vorgesehen sind, die berührungssichere Steckbuchsen für Gerätestecker der anzuschließenden Geräte und mit den Stromschienen oder Verbindungsleitungen in elektrischen Kontakt gebrachte oder bringbare Kontaktelemente aufweisen.

Mit dieser Ausbildung der Elektrifiziereinrichtung bestehen ohne aufwändige Kabelführungen leicht zugängliche, definierte Anschlussmöglichkeiten der in oder an dem Rahmengestell aufgenommenen elektrischen Geräte, wobei die Elektrifizierleiste auch leicht nachgerüstet und entsprechend den Anforderungen des Anwenders mit geeigneten-Einsätzen vorkonfektioniert werden kann. Die Elektrifizierleiste kann beispielsweise auch an der Innenseite einer an dem Rahmen angeordneten Tür angebracht werden. Ein Austausch der Elektrifizierleiste mit anderer Konfektionierung ist einfach und kostengünstig möglich. Da ein zentraler Bestandteil der Elektrifiziereinrichtung unter Wahrung der Schutzbestimmungen vorgegeben ist, ist auch einer unsachgemäßen Elektroinstallation und Überlastung stromführender Teile vorgebeugt.

Eine vorteilhafte Ausgestaltung besteht darin, dass in den mindestens einen Hohlraum des Aufnahmeprofils ein Isolierprofil eingesetzt ist, in dem die Stromschienen eingebettet sind und über in dem Isolierprofil ausgebildete Zugangsöffnungen berührungssicher zugänglich sind.

Eine einfache Bedienung und Personenschutzvorkehrungen werden dadurch unterstützt, dass der Hohlraum im Querschnitt rechteckförmig oder quadratisch mit einer der offenen Längsseite gegenüberliegenden Basiswand und an diese angrenzenden Seitenwänden geformt ist, dass das Isolierprofil mit einer Grundseite eines die Stromschienen einbettenden Grundabschnittes der Basiswand oder einer Seitenwand zugekehrt ist und dass die Stromschienen über die in dem Grundabschnitt auf der der Grundseite gegenüberliegenden Seite eingebrachte, für die Berührungssicherheit schmalen Zugangsöffnungen mit den Kontaktelementen kontaktierbar sind.

Zu einem auch für die Fertigung günstigen Aufbau tragen die Maßnahmen bei, dass das Isolierprofil mittels an ihm angeordneter Raststrukturen und dazu komplementärer, in dem Aufnahmeprofil angeordneter Rast-Gegenstrukturen in dem Aufnahmeprofil festgelegt ist.

Um einem unsachgemäßen Gebrauch vorzubeugen, sind die Maßnahmen vorteilhaft, dass die Raststrukturen und die Rast-Gegenstrukturen entgegen der Einsetzrichtung steile Rastflanken aufweisen, so dass das Isolierprofil nicht zerstörungsfrei entnehmbar ist.

Die Montage und ein sicherer Aufbau werden weiterhin dadurch begünstigt, dass das Isolierprofil aus einem die Stromschienen in voneinander isolierten Längskammern aufnehmenden Isolierprofil-Unterteil und einem die Stromschienen abdeckenden, die Zugangsöffnungen aufweisenden Isolierprofil-Oberteil zusammengesetzt ist.

Ein zuverlässiger Berührungsschutz und eine eindeutige Anordnung der Einsätze werden dadurch begünstigt, dass die Zugangsöffnungen pro Einsatz aus einer Gruppe von mindestens zwei lochförmigen Zugangsöffnungen gebildet sind, die getrennten Stromschienen zugeordnet sind.

Weiterhin wird eine eindeutige Anordnung der Einsätze dadurch unterstützt, dass mindestens zwei Zugangsöffnungen in Längsrichtung des Isolierprofils voneinander versetzt sind.

Für die Kontaktierung und Ausbildung der Einsätze sind weiterhin die Maßnahmen vorteilhaft, dass die Kontaktelemente als Kontaktstifte ausgebildet sind, die an die Größe und Lage der Zugangsöffnungen angepasst sind.

Zur einfachen Montage tragen die Maßnahmen bei, dass die Einsätze mit Rastelementen versehen sind, mit denen sie in in dem Aufnahmeprofil oder an dem Isolierprofil ausgebildeten Rast-Gegenelementen nicht zerstörungsfrei entnehmbar oder nur mit einem Werkzeug entnehmbar festlegbar sind.

Ist vorgesehen, dass in dem Isolierprofil mindestens drei Stromschienen eingebettet sind, mit denen mindestens zwei getrennte Versorgungsstromkreise gebildet sind, so kann z.B. einfach von einer Standard-Stromversorgung etwa aus dem Netz auf eine unterbrechungsfreie Stromversorgung bei Ausfall der Standard-Stromversorgung übergegangen werden. Alternativ können die getrennten Versorgungskreise auch zum Vermeiden einer Überlastung dadurch genutzt werden, dass die Anzahl der eingesetzten Einsätze auf die verschiedenen Stromkreise aufgeteilt sind. Beispielsweise kann eine in der Mitte liegende Stromschiene als Masseschiene ausgebildet und gegenüber den seitlich daneben liegenden Stromschienen auch stärker ausgelegt oder in höherer oder tieferer Lage angeordnet sein. Beispielsweise können mit den drei Phasen zugeordneten Stromschienen drei Standard-Stromkreise mit der zentralen Masseschiene gebildet werden.

Eine für den Anschluss standardisierter Einbaugeräte günstige Ausgestaltung besteht darin, dass die Abmessung der Einsätze in Längsrichtung der Elektrifizierleiste eine Höheneinheit oder eine ganzzahlige Mehrzahl davon beträgt und dass die Einsätze zur Aufnahme eines oder mehrerer Gerätestecker ausgebildet sind.

Eine einfache, eindeutige Montage, bei der z.B. die Rasterung von Rahmenschenkeln relativ zu einer Rasterung oder Markierung der Elektrifizierleiste ausgenutzt werden kann, besteht darin, dass das Aufnahmeprofil auf zumindest einer Längsseite mit Befestigungselementen zum Verbinden mit dem mindestens einen Rahmenschenkel oder Montageprofil versehen ist. Dabei ergeben sich verschiedene vorteilhafte Ausgestaltungsmöglichkeiten dadurch, dass die Befestigungselemente für eine Schraub-, Klips-, Rast-, Steck- oder Klemmverbindung ausgebildet sind.

Eine günstige Handhabung bei der Anordnung in einem Rahmengestell ergibt sich dadurch, dass das Aufnahmeprofil im Querschnitt H-förmig mit zwei Seitenwänden und einer Mittenwand ausgebildet ist und dass die Einsätze in den Hohlraum auf einer einem Benutzer zugekehrten Seite der Mittenwand eingesetzt sind, während die Stromschienen oder die Verbindungsleitungen in den von dem Benutzer abgekehrten Hohlraum eingebracht und durch die Mittenwand zugänglich sind.

Zu einer einfachen Montage mit eindeutiger Anordnung tragen die Maßnahmen bei, dass in der Mittenwand Aussparungen vorgesehen sind, in die berührungssichere, von der Benutzerseite her zugängliche Steckerkupplungen eingesetzt sind, und dass auf der von der Benutzerseite abgekehrten Rückseite der Einsätze mindestens eine an die Steckerkupplungen angepasste Steckereinheit angeordnet ist.

Eine einfache Nutzung unterschiedlicher Stromversorgungen wird dadurch erreicht, dass pro Einsatz zwei in Längsrichtung des Aufnahmeprofils voneinander beabstandete Steckerkupplungen vorhanden sind, die an verschiedene Stromversorgungen angeschlossen sind, und dass die Einsätze zum Auswählen einer der beiden Stromversorgungen mit ihrer Rückseite in zwei um 180° gedrehten Stellungen in das Aufnahmeprofil einsetzbar und mit der betreffenden Steckerkupplung verbindbar sind. Beispielsweise kann damit der Anwender auf einfache Weise eine Standardstromversorgung oder eine unterbrechungsfreie Stromversorgung vorsehen.

Ein vorteilhafter Aufbau mit einfacher Bedienung besteht ferner darin, dass die Einsätze Modulgehäuse mit auf ihren in Längsrichtung von einem der benachbarten Schmalseiten eingesetzten stirnseitigen kappenartigen Abschlussstücken versehen sind, an denen seitlich die Rastelemente einstückig mit federnden Rastfingern und Betätigungselementen zum Lösen angeformt sind.

Die Anwendung wird ferner dadurch begünstigt, dass in den Einsätzen ein Sicherungsautomat integriert ist.

Für den Anschluss der Elektrifiziereinrichtung sind des Weiteren die Maßnahmen vorteilhaft, dass in einem .Endabschnitt des Aufnahmeprofils mindestens eine berührungssicher ausgebildete Einspeisekupplung für die Stromversorgung angeordnet ist und dass ein an die Einspeisekupplung angepasster Einspeisestecker mit daran angeschlossenem Speisekabel-vorgesehen ist.

Weitere vorteilhafte Ausgestaltungen für die Funktion und Anwendung bestehen darin, dass die Einspeisekupplung an oder in einem Einspeisemodul ausgebildet ist und dass in dem Einspeisemodul ein Netzteil zur Spannungsumsetzung oder -anpassung, eine Strombegrenzung und/oder ein Schaltgerät zum sequentiellen Aktivieren einzelner Einsätze integriert ist.

Ein vorteilhafter Einbau wird dadurch geboten, dass die Elektrifiziereinrichtung für ein Rack oder einen Schaltschrank mit einem Aufbau nach dem kennzeichnenden Teil des Anspruches 1 ausgebildet ist.

Hierbei bestehen vorteilhafte Ausgestaltungen in einer Ausbildung gemäß den Unteransprüchen 2 bis 22.

Die Erfindung wird nachfolgend anhand von Ausführungsbeispielen unter Bezugnahme auf die Zeichnungen näher erläutert. Es zeigen:
- Fig. 1: eine perspektivische Darstellung eines Rahmengestelles mit darin integrierten Montageprofilen und einer vertikalen Elektrifizierleiste in perspektivischer Darstellung,
- Fig. 2: eine entsprechend Fig. 1 entlang einem vertikalen Montageprofil eines Schaltschrank-Rahmengestelles hinter einem Türrand montierte Elektrifizierleiste in perspektivischer Darstellung,
- Fig. 3: ein weiteres Rahmengestell eines Schaltschrankes-mit montierter Tür und einer entlang einem vertikalen Montageprofil montierten Elektrifizierleiste von einer gegenüber Fig. 2 rückseitigen perspektivischen Ansicht,
- Fig. 4A: einen Ausschnitt einer Elektrifizierleiste mit eingesetztem Isolier-profil und einem Einsatz in perspektivischer Darstellung,
- Fig. 4B: einen Querschnitt eines Aufnahmeprofils der Elektrifizierleiste nach Fig. 4A,
- Fig. 4C: einen Unterteil eines Isolierprofils mit eingelegten Stromschienen in perspektivischer Ansicht,
- Fig. 4D: einen aus einem Isolierprofil-Unterteil und Isolierprofil-Oberteil zusammengesetzten Abschnitt eines Isolierprofils,
- Fig. 5A und 5B: einen Einsatzunterteil von zwei um 90° gegeneinander verdrehten Seiten,
- Fig. 5C: einen aus Einsatzunterteil und Einsatzoberteil zusammengesetzten Einsatz in perspektivischer Darstellung,
- Fig. 6: ein weiteres Ausführungsbeispiel einer Elektrifizierleiste,
- Fig. 7A: eine auseinander gezogene perspektivische Darstellung eines weiteren Ausführungsbeispiels für ein Isolierprofil und darin einzusetzende Einsätze,
- Fig. 7B: einen Ausschnitt einer weiteren Elektrifizierleiste mit dem Isolierprofil und den Einsätzen nach Fig. 7A in einer anderen perspektivischen Ansicht,
- Fig. 7C: die Elektrifizierleiste nach Fig. 7B in zusammengesetzter Darstellung in einer weiteren perspektivischen Ansicht,
- Fig. 8A und 8B: einen Ausschnitt einer weiteren Elektrifizierleiste mit eingesetztem bzw. abgenommenem Einsatz in perspektivischer Ansicht,
- Fig. 9: einen Ausschnitt der Elektrifizierleiste nach den Fig. 8A, 8B im Bereich einer Stromeinspeisung und
- Fig. 10: ein Anschlussschema einer Elektrifiziereinrichtung insbesondere nach den Fig. 8A bis 9.

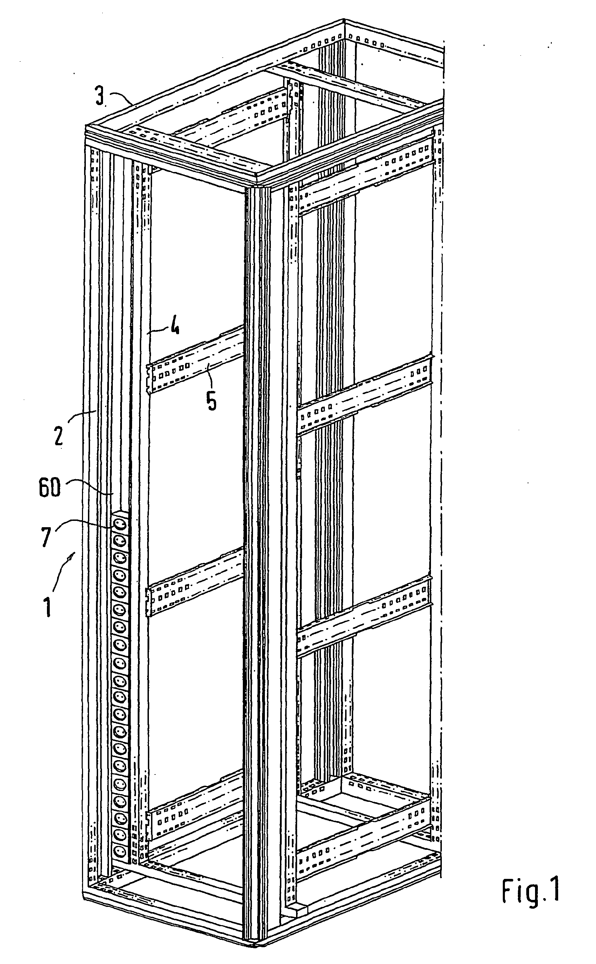

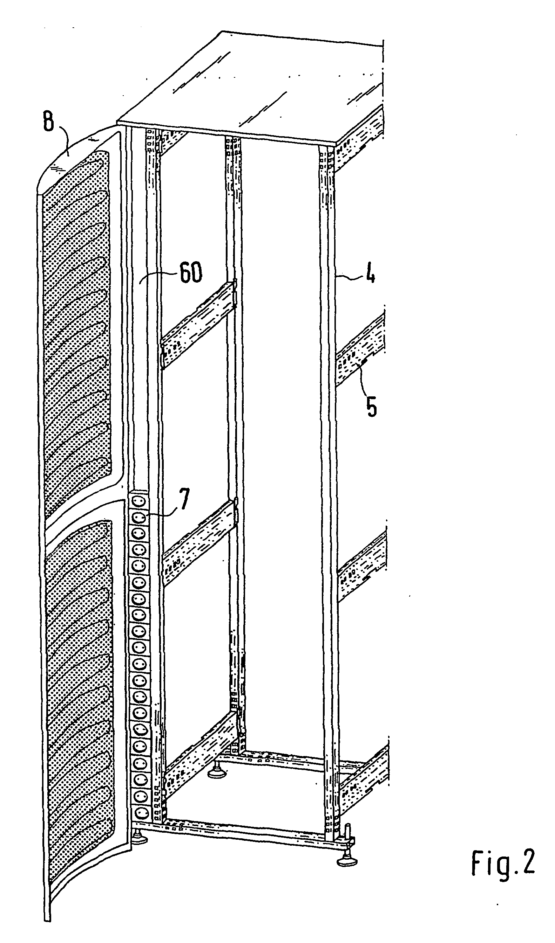

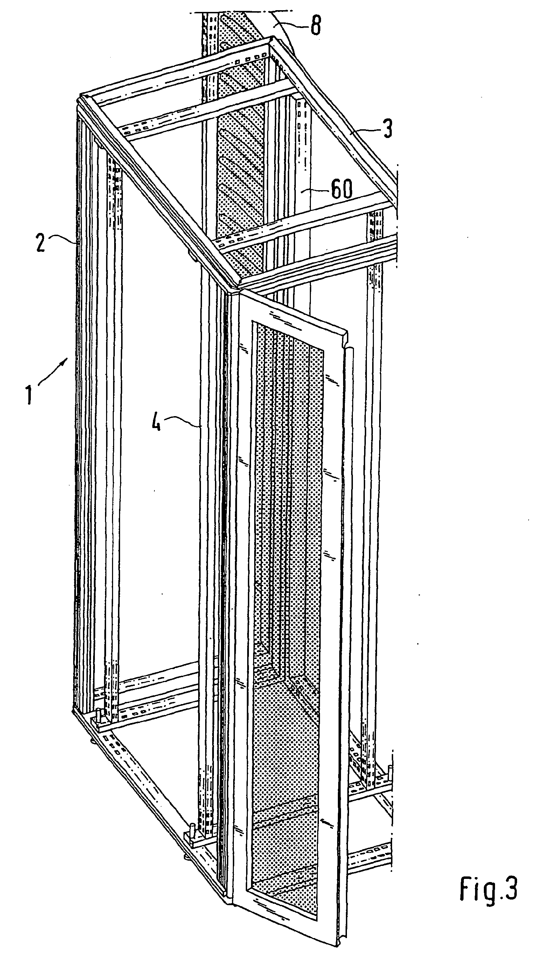

Ein in Fig. 1 gezeigtes Rahmengestell 1 aus vertikalen Rahmenschenkeln 2 und horizontalen Rahmenschenkeln 3, das beispielsweise mittels Wandelementen und einem oder mehreren Türelementen 8 (vgl. Fig. 2 und 3) zu einem Schaltschrank ergänzt werden kann und beispielsweise informationstechnische Geräte aufnehmen kann, ist im Inneren mit vertikalen und horizontalen Montageprofilen 4, 5 sowie einer entlang dem vertikalen Montageprofil 4 montierten Elektrifizierleiste 60 ausgerüstet. Die Elektrifizierleiste 60 ist beispielsweise an dem Montageprofil 4 mittels (nicht gezeigter) Klemmen, Schrauben, Klipse, Rast- oder Steckelemente seitlich des vertikalen Montageprofils 4 montiert. Wie die Fig. 2 und 3 zeigen, kann die Elektrifizierleiste 60 in dieser Anordnung günstig von einem vertikalen Türrand verdeckt werden. Die Elektrifizierleiste 60 ist vorliegend in ihrem unteren Abschnitt mit steckdosenartigen Einsätzen 7 für die elektrische Energieversorgung bestückt. In dem oberen Abschnitt der Elektrifizierleiste 60 sind weitere Anschlussmöglichkeiten für Einsätze 7 vorgesehen.

Fig. 3 zeigt die Elektrifizierleiste 60 bezüglich den Fig. 1 und 2 von ihrer Rückseite. Die Elektrifizierleiste 60 kann alternativ auch an einem vertikalen oder horizontalen Rahmenschenkel 2, 3 oder an einem oder mehreren der horizontalen Montageprofile z.B. in Form von Montageleisten 5 vertikal oder horizontal angebracht sein. Einfach anbringbar ist die Elektrifizierleiset 60 auch an der Innenseite des Türelementes 8, z.B. an einem dort vorhandenen Türrohrrahmen.

Zum Anbringen der Elektrifizierleiste 60 sind Befestigungselemente, beispielsweise längs -verlauf ende T-Nuten zum Einsetzen einer Nutschiene oder von.Nutmuttern, Raster aus Befestigungslöchern, Rastmittel, Klipse oder Steckmittel vorgesehen, die beispielsweise in einer oder mehreren Außenseiten der Elektrifizierleiste 60 ausgebildet sind. Vorteilhaft ist eine U-förmige, entlang mindestens-einem Rahmenschenkel verlaufende Aufnahme einstückig an diesem ausgebildet, in die die Elektrifiziereinleiste 60 mittels Rastmittel eingerastet ist. Die Rastmittel können dabei auf der Außenseite der Elektrifizierleiste 60 verlaufende Längsrippen oder - nuten einerseits und im Innern der Aufnahme verlaufende, angepasste Gegen-Rastmittel sein.

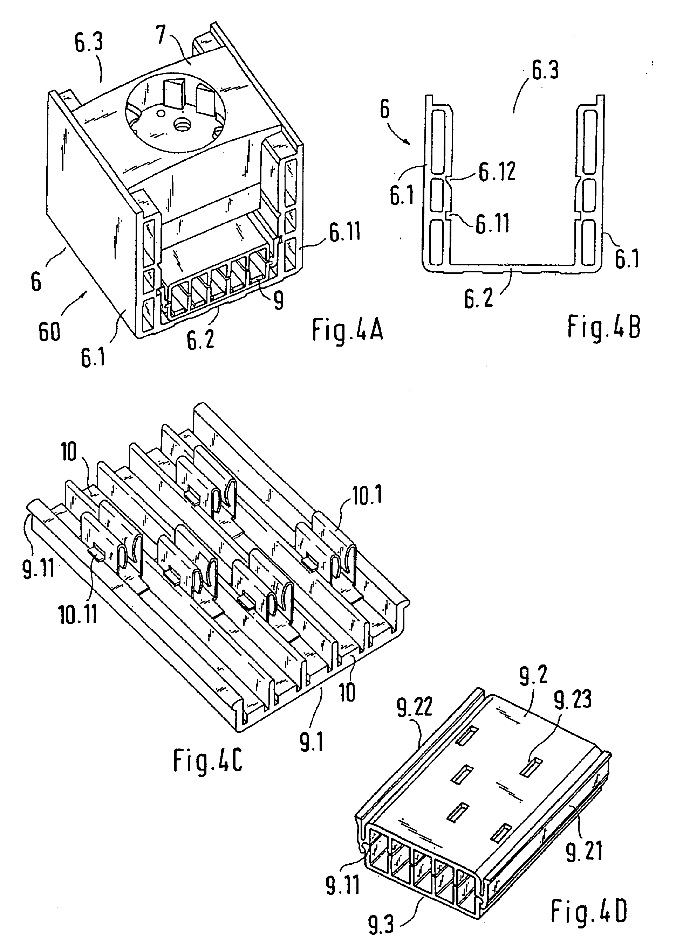

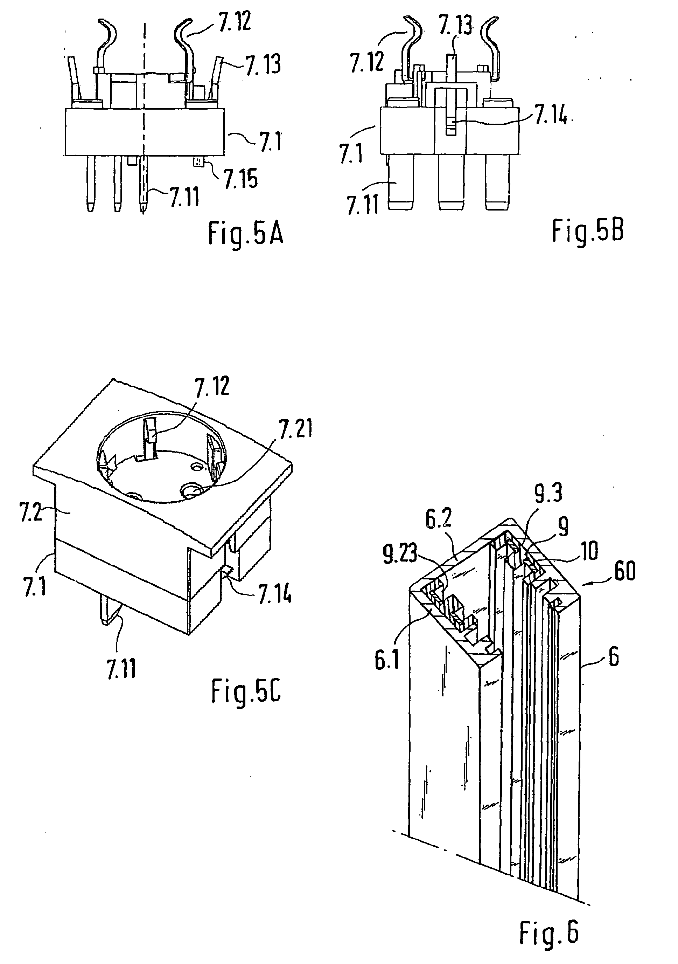

Wie Fig. 4A zeigt, ist die Elektrifizierleiste 60 aus einem äußeren, im Querschnitt im Wesentlichen U- oder, wie Fig. 6 zeigt, im Wesentlichen C-förmigen Aufnahmeprofil 6 sowie einem darin aufgenommenen Isolierprofil 9 mit darin eingebetteten Stromschienen 10 zusammengesetzt. Das Isolierprofil 9 ist mit seiner Grundseite 9.3 der Basiswand 6.2 des Aufnahmeprofils 6 zugekehrt und ist, wie Fig. 4D zeigt, aus einem Isolierprofil-Unterteil 9.1 und einem darauf aufgeklipsten oder aufgerasteten Isollerprofil-Oberteil 9.2 zusammengesetzt. Wie Fig. 4C zeigt, sind in dem Isolierprofil-Unterteil 9.1 mittels senkrechter, längs verlaufender Isolierstege längsverlaufende Kammern gebildet, in die die Stromschienen 10 eingelegt sind. Zum Kontaktieren sind auf der von der Grundseite 9.3 abgewandten Seite der Stromschienen 10 im Querschnitt U-förmige Kontaktfedern 10.1 mit in Richtung der Stromschienen 10 verlaufenden Kontaktierschlitzen z.B. mittels Laserschweißens befestigt und können mit auf den Stegen liegenden Auflagenasen 10.11 stabilisiert sein. Die äußeren Stege des Isolierprofilunterteils 9.1 besitzen an ihren freien Rändern auf der Außenseite wulstartige Schnappränder 9.11, die von auf der Innenseite von zugekehrten äußeren Stegen des Isolierprofil-Oberteils 9.2 angepassten Ausnehmungen im zusammengesetzten Zustand übergriffen und mittels der elastischen Kräfte der Stege ineinander gehalten werden.

Im Bereich der dem Isolierprofil-Unterteil 9.1 zugekehrten unteren Ränder der seitlichen Stege des lsolierprofil-Obertells 9.2 sind jeweilige leistenartige Rastfedern 9.21 angeformt, die in Abstand von den seitlichen Stegen etwa bis in die Höhe der Oberseite des Isolierprofil-Oberteils 9.2 geführt sind und auf den Außenseiten ihrer freien Enden mit Rasthaken 9.22 versehen sind. Das Aufnahmeprofil 6 weist mit den Rasthaken 9.22 zusammenwirkende Rastnuten 6.11 als Rast-Gegenstruktur auf, in die die Rasthaken 9.22 bei vollständig eingesetztem Isolierprofil 9 eingreifen. Entgegen der Einsetzrichtung sind die Rast-haken 9.22 und die Rastnuten 6.1 mit steilen Rastflanken versehen, so dass das in das Aufnahmeprofil 6 eingerastete Isolierprofil 9 nicht entnehmbar ist, ohne es zu zerstören. Zum Einsetzen sind die Rasthaken 9.22 in Einführrichtung auf ihrer Unterseite mit schrägen Rastflanken versehen.

Das Isolierprofil-Oberteil 9.2 weist auf seiner Oberseite in Querrichtung entsprechend dem Abstand der Stromschienen 10 voneinander beabstandete, in Längsrichtung der Stromschienen 10 gerichtete rechteckförmige Kontaktieröffnungen 9.23 auf, in die mit den Stromschienen 10 zu kontaktierende entsprechend flache, im Querschnitt rechteckförmige Kontaktstifte 7.11 eingreifen. In Längsrichtung der Elektrifizierleiste 60 sind die Kontaktieröffnungen 9.23 entsprechend den Kontaktfedern 10.1 und den an den Einsätzen 7 angeordneten Kontaktstiften 7.1 1(vgl. Fig. 5A bis 5C) beabstandet angeordnet. Mit dieser Anordnung der Kontaktieröffnungen 9.23 und der Kontaktstifte 7.1 ergibt sich eine Codierungsmöglichkeit der Einsätze 7. Zum Fixieren der Einsätze 7 weisen diese an ihrem Einsatzunterteil 7.1 gelagerte Rastfinger 7.14 mit Rastnase auf, die in daran angepasste, auf der Innenseite der Seitenwände 6.1 des Aufnahmeprofils 6 angeordnete nutartige Rast-Gegenelemente 6.12 eingreifen. Die Rastnasen der Rastfinger 7.14 sind ebenfalls entgegen der Einsetzrichtung mit steilen Rastflanken versehen, die mit entsprechend steilen Rastflanken der Rast-Gegenelemente 6.12 zusammenwirken, so dass die Einsätze 7 sicher festgelegt sind. Die Einsätze 7 können beispielsweise mittels eines speziellen Werkzeuges entnommen-werden, das auf hebelartige Betätigungsabschnitte 7.13 der Rastfinger 7.14 wirkt, die bezüglich der Rastfinger gegenüber einer Schwenkachse derselben angeordnet sind. Wie aus Fig. 4A weiter ersichtlich, ist der Hohlraum 6.3 des Aufnahmeprofils so ausgelegt, dass er in seiner Tiefe im Wesentlichen von dem Isolierprofil 9 und dem in den Hohlraum 6.3 ragenden Abschnitt des Einsatzes 7 ausgefüllt ist. Dabei liegen nach außen gerichtete Abschnitte eines Einsatzoberteils 7.2 mit ihren Schultern auf Absätzen im oberen Randbereich des Aufnahmeprofils 6 auf.

Wie die Fig. 5A bis 5C weiter erkennen lassen, weist das Einsatzunterteil 7.1 verschiedene Elemente einer Versorgungssteckdose auf, wie Erdungsfeder 7.12, Steckschuhe 7.15 und beispielsweise auch einen Sicherungsautomat oder Brückenelemente. Das Einsatzoberteil 7.2 weist entsprechend anzuschließender Stecker angeordnete Stecköffnungen 7.21 auf.

Bei dem Ausführungsbeispiel nach Fig. 6 sind zwei Teil-Isolierprofile 9 mit eingebetteten Stromschienen 10 in seitlichen Bereichen der Seitenwand 6.1 des Aufnahmeprofils 6 in entsprechend angepassten Aufnahmeabschnitten eingesetzt. Die Kontaktieröffnungen 9.23 sind dabei als schmale längsverlaufende, relativ tiefe nutartige Schlitze auf der Oberseite der Stromschienen 10 ausgebildet, so dass auch dadurch ein entsprechender Berührungsschutz erzielt wird. Die Kontaktierung der Kontaktelemente der entsprechend ausgebildeten Einsätze erfolgt seitlich und kann z.B. durch einen Einsetzvorgang und anschließenden Drehvorgang oder durch seitliches Verschieben der Kontaktelemente in den Einsätzen 7 vorgenommen werden.

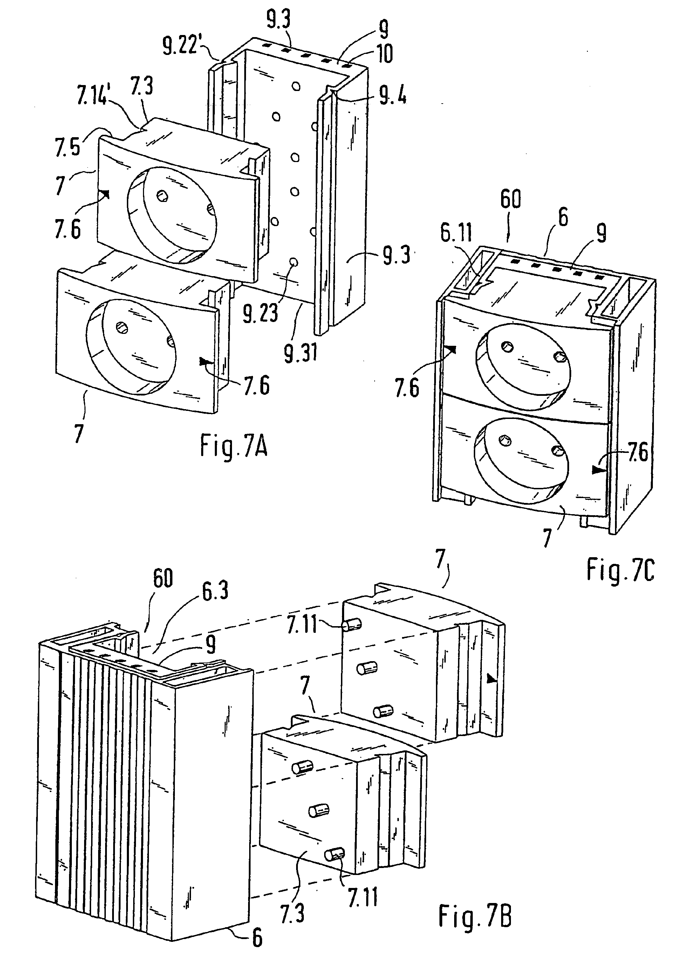

Bei dem in den Fig. 7A bis 7C gezeigten weiteren Ausführungsbeispiel ist das Isolierprofil 9 U-förmig-ausgelegt, wobei auf den Außenseiten der U-Schenkel als Raststruktur längs verlaufende Rastnuten 9.22' ausgebildet sind, in die auf der Innenseite der Seitenwand 6.1 des Aufnahmeprofils 6 entsprechend angeordnete rippenartige Rast-Gegenstrukturen 6.11' im eingesetzten Zustand eingreifen. Auch hierbei sind entgegen der Einsetzrichtung steile Rastflanken vorgesehen, um ein Entnehmen des eingesetzten Isolierprofils 9 zu verhindern. Zum Festlegen der Einsätze 7 sind auf deren den U-Schenkeln zugekehrten Außenseiten nutartige Rastelemente 7.14' und auf den zugekehrten Innenseiten der U-Schenkel an entsprechender Stelle als Rast-Gegenstruktur 6.11' Rastvorsprünge angeordnet, wobei auch diese Rastverbindung steile Rastflanken aufweist, um ein einfaches Entnehmen der Einsätze 7 zu verhindern.

Die Einsätze 7 weisen in Längsrichtung der Elektrifizierleiste 60 vorteilhaft eine Abmessung auf, die einer Höheneinheit entspricht. Die Einsätze können auch zum Kontaktieren von als Datenleitungen ausgebildeten oder verwendeten Stromschienen 10 ausgelegt sein. Bei der Stromversorgung sind sie entsprechend den Normen als übliche Steckeinheiten bzw. Steckdosen, etwa für Kaltgeräte-Steckverbindungen ausgelegt. Die Kontaktstifte 7.11 sind bei dem Ausführungsbeispiel nach den Fig. 7A bis 7C als im Querschnitt runde Kontaktstifte ausgebildet, und auch die Kontaktieröffnungen 9.23 sind als runde Öffnungen ausgelegt.

Mit den Stromschienen 10 können mehrere Stromkreise gebildet werden, beispielsweise indem von der Oberseite des Rahmengestelles 1 eine Standardstromversorgung und von der Unterseite eine unterbrechungsfreie Stromversorgung vorgesehen ist, auf die im Bedarfsfall umgeschaltet werden kann. Denkbar ist auch, mit den drei Phasen des Wechselstromnetzes mittels z.B. fünf Stromschienen 10, von denen eine zentral als mittlere Erdungsschiene angeordnet ist, drei getrennte Stromkreise zu bilden, die jeweils einer geeigneten Anzahl von Einsätzen 7 zugeordnet-sind, so dass eine zu hohe Belastung vermieden wird. Die Einsätze 7 können dabei werksseitig entsprechend angeschlossen sein. Auf Kundenwunsch kann eine geeignet vorkonfektionierte Elektrifizierleiste 60 hergestellt werden. Auch nachträglich können geeignet ausgestattete Elektrifizierleisten 60 nachgerüstet werden.

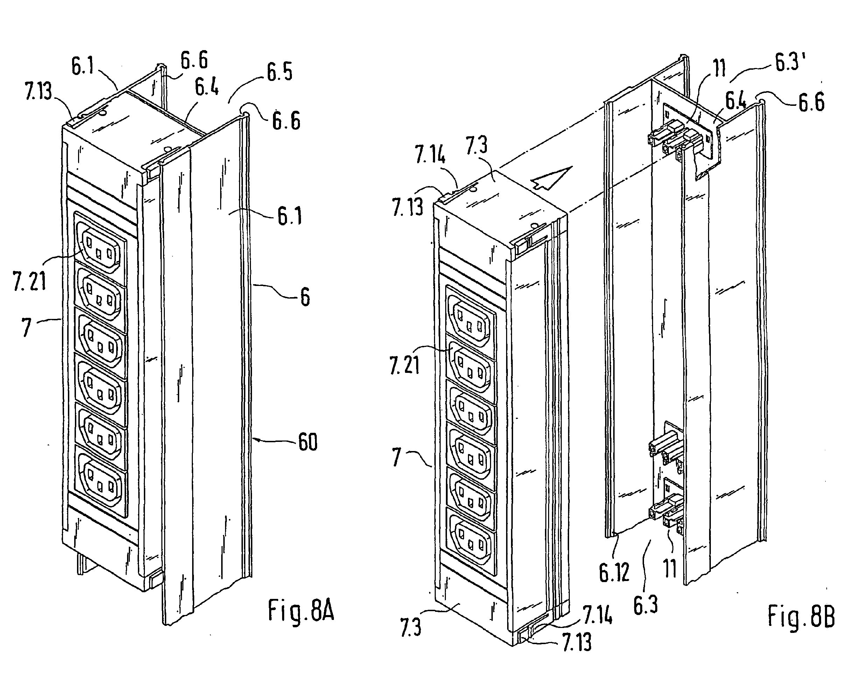

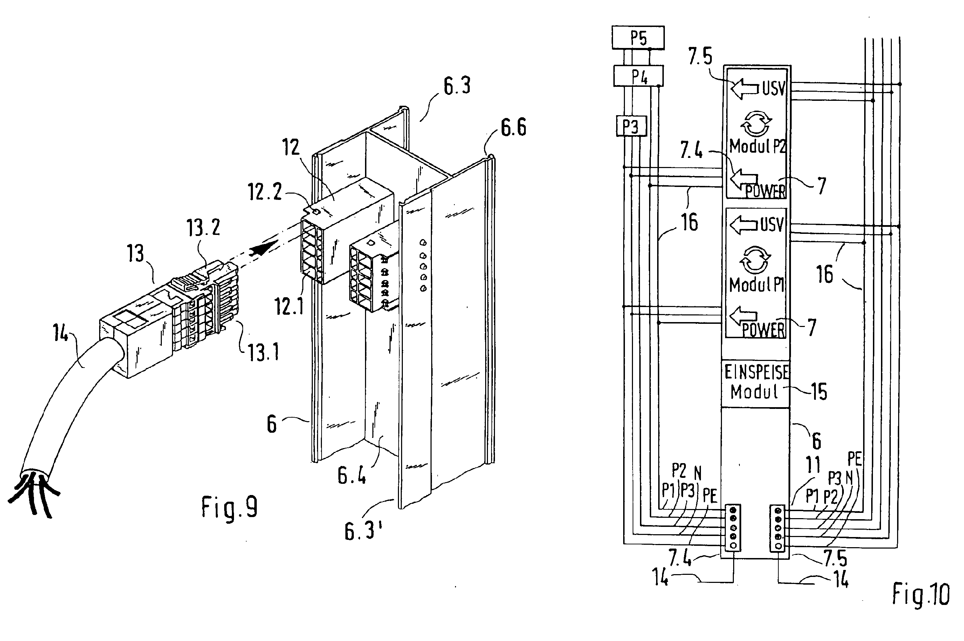

Bei dem Ausführungsbeispiel nach den Fig. 8A, 8B und 9 ist das Aufnahmeprofil 6 (Elektrifizierleiste) im Querschnitt H-förmig aufgebaut und weist auf der einem Benutzer zugekehrten Vorderseite einer Mittenwand 6.4 den Hohlraum 6.3 und auf der dem Benutzer abgekehrten Rückseite einen weiteren Hohlraum 6.5 auf. Die Einsätze 7, die mehrere, vorliegend sechs Stecköffnungen für genormte Gerätestecker aufweisen, sind lösbar in den Hohlraum 6.3 einsetzbar, während die Verbindungsleitungen 16 (vgl. Fig. 10), die aus einfachen Anschlusskabeln oder Anschlussdrähten oder auch Stromschienen 10 bestehen können, in dem weiteren Hohlraum 6.5 verlegt sind. Auf der Innenseite der den weiteren Hohlraum 6.2 begrenzenden Seitenwände 6.1 sind in deren freiem Randbereich in Längsrichtung verlaufende Aufnahmenuten 6.6 ausgebildet, in die eine Abdeckung einschiebbar ist. Zur Montage an dem Rahmengestell oder einer Schrankwand bzw. Tür oder Montageplatte kann die Abdeckung zuvor mit geringem Abstand von dem Rahmenschenkel bzw. der Wandfläche montiert und das Aufnahmeprofil 6 mit den Aufnahmenuten 6.6 aufgeschoben oder auch auf-gerastet werden. Die Rast-Gegenelemente 6.12 zum Einrasten der Einsätze 7 sind auf der Innenseite der den Hohlraum 6.3 begrenzenden Seitenwände 6.1 an deren freiem Endbereich ausgebildet und bestehen vorliegend ebenfalls in Längsnuten.

Die Einsätze 7 mit den intern angeschlossenen, über die Stecköffnungen 7.21 berührungssicher zugänglichen Kontaktelementen. 7.11 weisen quaderförmige Modulgehäuse auf, die auf ihren in Längsrichtung voneinander beabstandeten Schmalseiten mit stirnseitigen Abschlussstücken 7.3 in Form von Stirnkappen abgeschlossen sind. Einsätze 7 mit verschiedenen gängigen Stecköffnungen 7.21, wie z.B. für Schukostecker, Kältegerätestecekr oder unterschiedliche Ländernormen sind vorgesehen. An den Abschlussstücken 7.3 sind seitlich federnde Rastfinger mit jeweiligen Rastelementen 7.14 und manuell betätigbaren Betätigungsabschnitten 7.13 angeformt. Auf der von dem Benutzer abgekehrten Rückseite sind die Einsätze 7 mit mindestens einer Steckereinheit versehen, die an in Aussparungen in der Mittenwand 6.4 eingesetzte berührungssichere Steckerkupplungen 11 angepasst und in diesen kontaktierbar sind. Pro Einsatz 7 bzw. Modulgehäuse sind zwei Steckerkupplungen 1 vorgesehen, die an verschiedene Stromversorgungen 7.4, 7.5, beispielsweise eine Standardstromversorgung 7.4 und eine unterbrechungsfreie Stromversorgung 7.5 angeschlossen sind, wie aus Fig. 10 ersichtlich. Die gewünschte Stromversorgung für den jeweiligen Einsatz 7 kann der Benutzer einfach dadurch wählen, dass er die Steckereinheit des Einsatzes 7 nach entsprechendem Drehen des Einsatzes 7 um 180° mit der der entsprechenden Stromversorgung 7.4, 7.5 zugeordneten Steckerkupplung 11 in Verbindung bringt.

Im Endbereich des Aufnahmeprofils 6 sind, wie Fig. 9 zeigt, den Stromversorgungen 7.4, 7.5 zugeordnete Einspeisekupplungen 12 auf der Vorderseite der Mittenwand 6.4 angeordnet, die ebenfalls berührungssicher ausgebildet sind und über Einspeisestecker 13 mit Speisekabeln 14 an eine Stromversorgung anschließbar sind. Wie Fig. 10 zeigt, können die in entsprechende Aussparungen in der Mittenwand 6.4 eingesetzten und auf der Rückseite an die Verbindungsleitungen 16 angeschlossenen Einspeisekupplungen 12 in ein Einspeisemodul 15 integriert sein, das weiterhin ein Netzteil zur Spannungsumsetzung oder Spannungsanpassung, eine Strombegrenzung Schaltgerät (Schutz) zum sequentiellen Aktivieren der einzelnen. Einsätze 7 für einen Überlastschutz aufweisen kann. Ferner stellen die Einspeisekupplungen 12 bzw. Spannungsversorgungen 7.4, 7.5 mehrere Phasen eines Drehstromnetzes bereit, auf die die einzelnen Einsätze 7 aufgeteilt werden, wie Fig. 10 zeigt, nach der z.B. der Einsatz-Modul P1 an die Phase P1, der Einsatz-Modul P2 an die Phase P2, der nächste Einsatz (angedeutet als P3) an die Phase P3 und anschließend wieder der folgende Einsatz an die Phase P1 und sofort angeschlossen werden.

Mit dem beschriebenen Aufbau der Elektrifiziereinrichtung erhält der Anwender ein einfaches Gerät, um z.B. einen Schaltschrank oder ein Rack auch nachträglich mit einer Elektrifizierung auszustatten, wobei er einzelne Einsätze als Stromversorgungsmodulen an geeigneten Stellen ohne Schwierigkeiten und sicher einsetzen kann.

## Patentansprüche

1. Rahmengestell für ein Rack oder einen Schaltschrank mit einer mit mindestens einem Rahmenschenkel (2, 3) oder Montageprofil (4) kombinierten Elektrifiziereinrichtung zum Zuführen und/oder Abführen elektrischen Stroms daran anschließbarer Geräte,
**dadurch gekennzeichnet,**
**dass** die Elektrifiziereinrichtung mindestens eine separate, an einem RahmenSchenkel (2, 3) oder Montageprofil (4) angebrachte Elektrifizierleiste (60) aufweist, die aus einem hohlen, zumindest auf einer Längsseite abschnittsweise offenen Aufnahmeprofil (6) mit in dessen mindestens einen Hohlraum (6.3) berührungssicher eingebrachten Stromschienen (10) oder Verbindungsleitungen (16) gebildet ist,
**dass** in die Elektrifizierleiste (60) eingesetzte oder einsetzbare Einsätze (7) vorhanden sind, die berührungssichere Steckbuchsen für Gerätestecker der anzuschließenden Geräte und mit den Stromschienen (10) oder Verbindungsleitungen (16) in elektrischen Kontakt gebrachte oder bringbare Kontaktelemente (7.11) aufweisen, und
**dass** das Aufnahmeprofil (6) auf mindestens einer Längsseite mit Befestigungselementen zum Verbinden mit dem mindestens einen Rahmenschenkel (2, 3) oder Montageprofil (4, 5) versehen ist.

2. Rahmengestell nach Anspruch 1,
**dadurch gekennzeichnet,**
**dass** in den mindestens einen Hohlraum (6.3, 6.3') des Aufnahmeprofils (6) ein Isolierprofil (9) eingesetzt ist, in dem die Stromschienen (10) eingebettet sind und über in dem Isolierprofil (9) ausgebildete Zugangsöffnungen (9.23) berührungssicher zugänglich sind.

3. Rahmengestell nach Anspruch 2,
**dadurch gekennzeichnet,**
**dass** der Hohlraum (6.3) im Querschnitt rechteckförmig oder quadratisch mit einer der offenen Längsseite gegenüberliegenden Basiswand (6.2) und an diese angrenzenden Seitenwänden (6.1) geformt ist,
**dass** das Isolierprofil (9) mit einer Grundseite (9.3) eines die Stromschienen (10) einbettenden Grundabschnittes der Basiswand (6.2) oder einer Seitenwand (6.1) zugekehrt ist und
**dass** die Stromschienen (10) über die in dem Grundabschnitt auf der der Grundseite gegenüberliegenden Seite eingebrachte, für die Berührungssicherheit schmalen Zugangsöffnungen (9.23) mit den Kontaktelementen (7.11) kontaktierbar sind.

4. Rahmengestell nach Anspruch 2 oder 3,
**dadurch gekennzeichnet,**
**dass** das Isolierprofil (9) mittels an ihm angeordneter Raststrukturen (9.21, 9.22, 9.22') und dazu komplementärer, in dem Aufnahmeprofil (6) angeordneter Rast-Gegenstrukturen (6.11, 6.11') in dem Aufnahmeprofil (6) festgelegt ist.

5. Rahmengestell nach Anspruch 4,
**dadurch gekennzeichnet,**
**dass** die Raststrukturen (9.21, 9.22, 9.22') und die Rast-Gegenstrukturen (6.11, 6.11') entgegen der Einsetzrichtung steile Rastflanken aufweisen, so dass das Isolierprofil (9) nicht zerstörungsfrei entnehmbar ist.

6. Rahmengestell nach einem der Ansprüche 2 bis 5,
**dadurch gekennzeichnet,**
**dass** das Isolierprofil (9) aus einem die Stromschienen (10) in voneinander isolierten Längskammern aufnehmenden Isolierprofil-Unterteil (9.1) und einem die Stromschienen (10) abdeckenden, die Zugangsöffnungen (9.23) aufweisenden Isolierprofil-Oberteil (9.2) zusammengesetzt ist.

7. Rahmengestell nach einem der Ansprüche 2 bis 6,
**dadurch gekennzeichnet,**
**dass** die Zugangsöffnungen (9.23) pro Einsatz (7) aus einer Gruppe von mindestens zwei lochförmigen Zugangsöffnungen gebildet sind, die getrennten Stromschienen (10) zugeordnet sind.

8. Rahmengestell nach Anspruch 7,
**dadurch gekennzeichnet,**
**dass** mindestens zwei Zugangsöffnungen (9.23) in Längsrichtung des Isolierprofils (9) voneinander versetzt sind.

9. Rahmengestell nach einem der Ansprüche 2 bis 8,
**dadurch gekennzeichnet,**
**dass** die Kontaktelemente als Kontaktstifte (7.11) ausgebildet sind, die an die Größe und Lage der Zugangsöffnungen (9.23) angepasst sind.

10. Rahmengestell nach einem der vorhergehenden Ansprüche,
**dadurch gekennzeichnet,**
**dass** die Einsätze (7) mit Rastelementen (7.14, 7.14') versehen sind, mit denen sie in in dem Aufnahmeprofil (6) oder an dem Isolierprofil (9) ausgebildeten Rast-Gegenelementen (6.12, 9.4) nicht zerstörungsfrei entnehmbar oder nur mit einem Werkzeug oder mittels einer die Rastverbindung freigebenden Handhabe (7.13) entnehmbar festlegbar sind.

11. Rahmengestell nach einem der vorhergehenden Ansprüche,
**dadurch gekennzeichnet,**
**dass** in dem Isolierprofil (9) mindestens drei Stromschienen (10) eingebettet sind oder mindestens drei Verbindungsleitungen (16) vorhanden sind, mit denen mindestens zwei getrennte Versorgungsstromkreise gebildet sind.

12. Rahmengestell nach Anspruch 11,
**dadurch gekennzeichnet,**
**dass** die Anzahl der eingesetzten Einsätze (7) auf die verschiedenen Stromkreise aufgeteilt oder aufteilbar ist.

13. Rahmengestell nach einem der vorhergehenden Ansprüche,
**dadurch gekennzeichnet,**
**dass** die Abmessung der Einsätze (7) in Längsrichtung der Elektrifizierleiste (60) eine Höheneinheit oder eine ganzzahlige Mehrzahl davon beträgt und
**dass** die Einsätze (7) zur Aufnahme eines oder mehrerer Gerätestecker ausgebildet ist.

14. Rahmengestell nach einem der vorhergehenden Ansprüche,
**dadurch gekennzeichnet,**
**dass** die Befestigungselemente für eine Schraub-, Klips-, Rast-, Steck- oder Klemmverbindung ausgebildet sind.

15. Rahmengestell nach einem der vorhergehenden Ansprüche,
**dadurch gekennzeichnet,**
**dass** das Aufnahmeprofil (6) im Querschnitt H-förmig mit zwei Seitenwänden (6.1) und einer Mittenwand (6.4) ausgebildet ist und
**dass** die Einsätze (7) in den Hohlraum (6.3) auf einer einem Benutzer zugekehrten Seite der Mittenwand (6.4) eingesetzt sind, während die Stromschienen (10) oder die Verbindungsleitungen (16) in den von dem Benutzer abgekehrten Hohlraum (6.3') eingebracht und durch die Mittenwand (6.4) zugänglich sind.

16. Rahmengestell nach Anspruch 15,
**dadurch gekennzeichnet,**
**dass** in der Mittenwand (6.4) Aussparungen vorgesehen sind, in die berührungssichere, von der Benutzerseite her zugängliche Steckerkupplungen (11) eingesetzt sind, und
**dass** auf der von der Benutzerseite abgekehrten Rückseite der Einsätze (7) mindestens eine an die Steckerkupplungen (11) angepasste Steckereinheit angeordnet ist.

17. Rahmengestell nach Anspruch 16,
**dadurch gekennzeichnet,**
**dass** pro Einsatz (7) zwei in Längsrichtung des Aufnahmeprofils (6) voneinander beabstandete Steckerkupplungen (11) vorhanden sind, die an verschiedene Stromversorgungen (7.4, 7.5) angeschlossen sind, und
**dass** die Einsätze (7) zum Auswählen einer der beiden Stromversorgungen (7.4, 7.5) mit ihrer Rückseite in zwei um 180° gedrehten Stellungen in das Aufnahmeprofil (6) einsetzbar und mit der betreffenden Steckerkupplung (11) verbindbar sind.

18. Rahmengestell nach einem der vorhergehenden Ansprüche,
**dadurch gekennzeichnet,**
**dass** die Einsätze (7) Modulgehäuse mit auf ihren in Längsrichtung voneinander abliegenden Schmalseiten eingesetzten stirnseitigen kappenartigen Abschlussstücken (7.3) versehen sind, an denen seitlich die Rastelemente (7.14) einstückig mit federnden Rastfingern und Betätigungselementen (7.13) zum Lösen angeformt sind.

19. Rahmengestell nach einem der vorhergehenden Ansprüche,
**dadurch gekennzeichnet,**
**dass** in den Einsätzen (7) ein Sicherungsautomat integriert ist.

20. Rahmengestell nach einem der vorhergehenden Ansprüche,
**dadurch gekennzeichnet,**
**dass** in einem Endabschnitt des Aufnahmeprofils (6) mindestens eine berührungssicher ausgebildete Einspeisekupplung (12) für die Stromversorgung (7.4, 7.5) angeordnet ist und
**dass** ein an die Einspeisekupplung (12) angepasster Einspeisestecker (13) mit daran angeschlossenem Speisekabel (14) vorgesehen ist.

21. Rahmengestell nach Anspruch 20,
**dadurch gekennzeichnet,**
**dass** die Einspeisekupplung (12) an oder in einem Einspeisemodul (15) ausgebildet ist, und
**dass** in dem Einspeisemodul (15) ein Netzteil zur Spannungsumsetzung oder--anpassung, eine Strombegrenzung und/oder ein Schaltgerät zum sequentiellen Aktivieren einzelner Einsätze (7) integriert ist.

22. Elektrifiziereinrichtung für ein Rack oder einen Schaltschrank mit einem Aufbau nach dem kennzeichnenden Teil des Anspruches 1.

23. Elektrifiziereinrichtung nach Anspruch 22,
**gekennzeichnet durch** eine Ausbildung gemäß dem kennzeichnenden Teil eines der Ansprüche 2 bis 22.

## Claims

1. Framework for a rack or a switchgear cabinet with an electrification device that is combined with at least one frame member (2, 3) or profiled mounting element (4) for supplying electric current to and/or removing electric current from devices that are connectable to the said framework, **characterised in that** the electrification device includes at least one separate electrification strip (60), which is mounted on a frame member (2, 3) or profiled mounting element (4) and is formed by a hollow profiled accommodating element (6) that is open in a sectional manner at least on one longitudinal side and has busbars (10) or connecting lines (16) inserted in an all-insulating manner in the at least one hollow space (6.3) in the said profiled accommodating element, **in that** there are provided inserts (7), which are inserted into or are insertable into the electrification strip (60) and include all-insulated female connectors for device plugs of the devices to be connected and contact elements (7.11) that are moved into or are movable into electric contact with the busbars (10) or connecting lines (16), and **in that** the profiled accommodating element (6) is provided on at least one longitudinal side with securing elements for connecting to the at least one frame member (2, 3) or profiled mounting element (4).

2. Framework according to claim 1, **characterised in that** a profiled insulating element (9) is inserted into the at least one hollow space (6.3, 6.3') of the profiled accommodating element (6), in which profiled insulating element the busbars (10) are embedded and are accessible in an all-protected manner by means of access openings (9.23) that are configured in the profiled insulating element (9).

3. Framework according to claim 2, **characterised in that** the hollow space (6.3) has a rectangular or quadratic cross-section with a base wall (6.2) that is situated opposite the open longitudinal side and side walls 6.1 that are adjacent the said base wall, **in that** the profiled insulating element (9) faces the base wall (6.2) or a side wall (6.1) with a bottom side (9.3) of a bottom portion in which the busbars (10) are embedded and **in that** the busbars (10) are contactable with the contact elements (7.11) by means of the access openings (9.23), which are provided in the bottom portion on the side situated opposite the bottom side and are narrow for contact protection purposes.

4. Framework according to claim 2 or 3, **characterised in that** the profiled insulating element (9) is secured in the profiled accommodating element (6) by means of snap-type locking structures (9.21, 9.22, 9.22') disposed thereon and counter snap-type locking structures (6.11, 6.11') that are complementary thereto and are disposed in the profiled accommodating element (6).

5. Framework according to claim 4, **characterised in that** the snap-type locking structures (9.21, 9.22, 9.22') and the counter snap-type locking structures (6.11, 6.11') include steep snap-type locking edges in opposition to the insertion direction which means that the profiled insulating element (9) is not removable in a non-destructive manner.

6. Framework according to one of claims 2 to 5, **characterised in that** the profiled insulating member (9) is made up by a profiled insulating element lower part (9.1), which accommodates the busbars (10) in longitudinal chambers insulated from one another, and a profiled insulating element upper part (9.2), which covers the busbars (10) and includes the access openings (9.23).

7. Framework according to one of claims 2 to 6, **characterised in that** the access openings (9.23) are formed per insert (7) by a group of at least two hole-shaped access openings, which are associated with separate busbars (10).

8. Framework according to claim 7, **characterised in that** at least two access openings (9.23) are offset from each other in the longitudinal direction of the profiled insulating member (9).

9. Framework according to claims 2 to 8, **characterised in that** the contact elements are in the form of contact pins (7.11), which are adapted to the size and position of the access openings (9.23).

10. Framework according to one of the preceding claims, **characterised in that** the inserts (7) are provided with snap-type locking elements (7.14, 7.14'), with which they are securable in counter snap-type locking elements (6.12, 9.4) provided in the profiled receiving means (6) or on the profiled insulating element (9) so as not to be removable in a non destructive manner or so as to be removable only with a tool or by means of an operating means (7.13) that releases the snap-type locking connection.

11. Framework according to one of the preceding claims, **characterised in that** at least three busbars (10) are embedded in the profiled insulating element (9) or there are at least three connecting lines (16), with which at least two separate power circuits are formed.

12. Framework according to claim 11, **characterised in that** the number of inserts (7) inserted is apportioned to or is apportionable to the different circuits.

13. Framework according to one of the preceding claims, **characterised in that** the dimension of the inserts (7) in the longitudinal direction of the electrification strip (60) is a unit of height or an integer multiple thereof and **in that** the inserts (7) are formed to accommodate one or more device plugs.

14. Framework according to one of the preceding claims, **characterised in that** the securing elements are designed for a screw-type, clip-type, snap-in-type, plug-in-type or clamping-type connection

15. Framework according to one of the preceding claims, **characterised in that** the profiled accommodating element (6) has an H-shaped cross-section with two side walls (6.1) and a central wall (6.4) and **in that** the inserts (7) are inserted into the hollow space (6.3) on a side of the central wall (6.4) facing a user, whereas the busbars (10) or the connecting lines (16) are mounted in the hollow space (6.3') remote from the user and are accessible through the central wall (6.4).

16. Framework according to claim 15, **characterised in that** recesses are provided in the central wall (6.4), into which recesses are inserted all-insulated plug-in couplings (11), which are accessible from the user side, and **in that** at least one plug unit that is adapted to the plug-in couplings (11) is disposed on the rear side of the inserts (7) remote from the user side.

17. Framework according to claim 16, **characterised in that** per insert (7) there are two plug-in couplings (11), which are spaced apart from each other in the longitudinal direction of the profiled accommodating element (6) and are connected to different power supplies (7.4, 7.5), and **in that**, for selecting one of the two power supplies (7.4, 7.5), the inserts (7) are insertable into the profiled accommodating element (6) with their rear side in two positions rotated by 180° and are connectable to the relevant plug-in coupling (11).

18. Framework according to one of the preceding claims, **characterised in that** the inserts (7) are modular housings provided on the end faces with cap-like closure pieces (7.3) inserted on their narrow sides that are remote from each other in the longitudinal direction, on which closure pieces the snap-type locking elements (7.14) are integrally formed at the sides in one piece with resilient locking fingers and actuating elements (7.13) for releasing purposes.

19. Framework according to one of the preceding claims, **characterised in that** an automatic cut-out means is incorporated in the inserts (7).

20. Framework according to one of the preceding claims, **characterised in that** at least one all-insulated incoming current coupling (12) for the power supply (7.4, 7.5) is disposed in an end portion of the profiled accommodating element (6) and **in that** an incoming current plug (13) that is adapted to the incoming current coupling (12) is provided with feeding cable (14) connected thereto.

21. Framework according to claim 20, **characterised in that** the incoming current coupling (12) is configured on or in an incoming current module (15), and **in that** a power pack for voltage conversion or voltage adaptation, a current limiting means and/or a switching device for the sequential activation of individual inserts (7) is incorporated in the incoming current module (15).

22. Electrification device for a rack or a switchgear cabinet designed in accordance with the characteristic part of claim 1.

23. Electrification device according to claim 22, **characterised by** an embodiment in accordance with the characteristic part of one of claims 2 to 22.

## Revendications

1. Baie pour un rack ou une armoire électrique, avec un dispositif d'électrification combiné à au moins un montant (2, 3) ou à un profilé de montage (4) servant à amener et/ou à évacuer du courant électrique à/des appareils pouvant être connectés,
**caractérisée**
**en ce que** le dispositif d'électrification présente au moins une baguette d'électrification (60) séparée, placée sur un montant (2, 3) ou un profilé de montage (4), laquelle est formée par un profilé de réception (6) creux, ouvert au moins par sections sur un côté longitudinal, avec des barres conductrices (10) ou des lignes de raccordement (16) insérées de manière protégée dans l'espace creux (6.3) au moins au nombre de un de ce profilé,
**en ce que** sont présents des inserts (7) insérés ou pouvant être insérés dans la baguette d'électrification (60), lesquels présentent des fiches femelles protégées pour des socles de connecteurs des appareils à raccorder ainsi que des éléments de contact (7.11) en contact électrique, ou pouvant être mis en contact électrique, avec les barres conductrices (10) ou les lignes de raccordement (16), et
**en ce que** le profilé de réception (6) est muni, sur au moins un côté longitudinal, d'éléments de fixation pour la liaison au montant (2,3) au moins au nombre de un ou au profilé de montage (4, 5).

2. Baie selon la revendication 1,
**caractérisée**
**en ce que** dans l'espace creux (6.3, 6.3') au moins au nombre de un du profilé de réception (6) est inséré un profilé isolant (9), dans lequel les barres conductrices (10) sont inserrées et sont accessibles de manière protégée via des ouvertures d'accès (9.23) réalisées dans le profilé isolant (9).

3. Baie selon la revendication 2,
**caractérisée**
**en ce que** l'espace creux (6.3) est formé de manière rectangulaire ou carrée en coupe transversale avec une paroi de base (6.2) située en vis-à-vis du côté longitudinal ouvert et avec des parois latérales (6.1) adjacentes à celle-ci,
**en ce que** le profilé isolant (9) est tourné, avec un côté de base (9.3) d'un segment de base dans lequel les barres conductrices (10) sont insérées, vers la paroi de base (6.2) ou une paroi latérale (6.1), et
**en ce que** les barres conductrices (10) peuvent être mises en contact, via les ouvertures d'accès (9.23) étroites pour la protection aménagées dans le segment de base sur le côté situé en vis à vis du côté de base, avec les éléments de contact (7.11).

4. Baie selon la revendication 2 ou 3,
**caractérisée**
**en ce que** le profilé isolant (9) est fixé dans le profilé de réception (6) à l'aide de structures d'encliquetage (9.21, 9.22, 9.22') disposées sur lui et de structures d'encliquetage antagonistes (6.11, 6.11') complémentaires, disposées dans le profilé de réception (6).

5. Baie selon la revendication 4,
**caractérisée**
**en ce que** les structures d'encliquetage (9.21, 9.22, 9.22') et les structures d'encliquetage antagonistes (6.11, 6.11') présentent des flancs d'encliquetage raides dans le sens contraire au sens d'insertion, de sorte que le profilé isolant (9) ne peut être retiré sans détériorations.

6. Baie selon l'une quelconque des revendications 2 à 5,
**caractérisée**
**en ce que** le profilé isolant (9) est constitué d'une partie inférieure de profilé isolant (9.1) recevant les barres conductrices (10) dans des compartiments longitudinaux isolés les uns des autres, et d'une partie supérieure de profilé isolant (9.2) recouvrant les barres conductrices (10) et présentant les ouvertures d'accès (9.23).

7. Baie selon l'une quelconque des revendications 2 à 6,
**caractérisée**
**en ce que** les ouvertures d'accès (9.23) sont formées, pour chaque insert (7), par un groupe d'au moins deux ouvertures d'accès en forme de trous, lesquelles sont associées à des barres conductrices (10) distinctes.

8. Baie selon la revendication 7,
**caractérisée**
**en ce qu'**au moins deux ouvertures d'accès (9.23) sont décalées l'une par rapport à l'autre en direction longitudinale du profilé isolant (9).

9. Baie selon l'une quelconque des revendications 2 à 8,
**caractérisée**
**en ce que** les éléments de contact sont réalisés en tant que fiches de contact (7.11) adaptées à la taille et à la position des ouvertures d'accès (9.23).

10. Baie selon l'une quelconque des revendications précédentes,
**caractérisée**
**en ce que** les inserts (7) sont munis d'éléments d'encliquetage (7.14, 7.14'), avec lesquels ils ne peuvent être retirés sans dommages des éléments d'encliquetage antagonistes (6.12, 9.4) réalisés dans le profilé de réception (6) ou au niveau du profilé isolant (9) ou bien peuvent être fixés de manière à pouvoir être enlevés seulement à l'aide d'un outil ou à l'aide d'une manette (7.13) libérant la liaison par encliquetage.

11. Baie selon l'une quelconque des revendications précédentes,
**caractérisée**
**en ce que** dans le profilé isolant (9) au moins trois barres conductrices (10) sont encastrées, ou au moins trois lignes de raccordement (16) sont présentes, avec lesquelles on forme au moins deux circuits d'alimentation électrique distincts.

12. Baie selon la revendication 11,
**caractérisée**
**en ce que** le nombre d'inserts (7) insérés est réparti ou peut être réparti sur les différents circuits électriques.

13. Baie selon l'une quelconque des revendications précédentes,
**caractérisée**
**en ce que** la dimension des inserts (7) en direction longitudinale de la baguette d'électrification (60) est d'une unité de hauteur ou d'un multiple entier de celle-ci, et en ce que les inserts (7) sont réalisés pour la réception d'un ou plusieurs socles de connecteur.

14. Baie selon l'une quelconque des revendications précédentes,
**caractérisée**
**en ce que** les éléments de fixation sont réalisés pour une liaison par vissage, à clips, par encliquetage, enfichable ou par serrage.

15. Baie selon l'une quelconque des revendications précédentes,
**caractérisée**
**en ce que** le profilé de réception (6) est réalisé en forme de H en coupe transversale avec deux parois latérales (6.1) et une paroi médiane (6.4), et
**en ce que** les inserts (7) sont insérés dans l'espace creux (6.3) sur un côté de la paroi du milieu (6.4) tourné vers un utilisateur, tandis que les barres conductrices (10) ou les lignes de raccordement (16) sont installées dans l'espace creux (6.3') opposé à l'utilisateur et sont accessibles à travers la paroi médiane (6.4).

16. Baie selon la revendication 15,
**caractérisée**
**en ce que** des évidements sont prévus dans la paroi médiane (6.4), dans lesquels des coupleurs de connecteurs (11) protégés et accessibles du côté de l'utilisateur sont insérés, et
**en ce que** sur le côté arrière des inserts ('7) opposé au côté de l'utilisateur, au moins une unité de connexion adaptée aux coupleurs de connecteurs (11) est disposée.

17. Baie selon la revendication 16,
**caractérisée**
**en ce qu'**il existe, pour chaque insert (7), deux coupleurs de connecteur (11) espacés l'un de l'autre en direction longitudinale du profilé de réception (6), lesquels sont raccordés à différents dispositifs d'alimentation électrique (7.4, 7.5), et
**en ce que** les inserts (7), pour la sélection de l'un des deux dispositifs d'alimentation électrique (7.4, 7.5), peuvent être insérés avec leur côté arrière dans le profilé de réception (6) dans deux positions tournées de 180° et peuvent être reliés au coupleur de connecteur (11) concerné.

18. Baie selon l'une quelconque des revendications précédentes,
**caractérisée**
**en ce que** les inserts (7) sont des boîtiers modulaires munis, sur leurs côtés étroits de manière décollée les unes des autres en direction longitudinale, de pièces terminales (7.3) insérées semblables à des capsules du côté frontal, sur lesquelles les éléments d'encliquetage (7.14) sont formés latéralement d'un seul tenant avec des doigts d'encliquetage à ressorts et des éléments d'actionnement (7.13) pour le détachement.

19. Baie selon l'une quelconque des revendications précédentes,
**caractérisée**
**en ce qu'**un coupe-circuit automatique est intégré dans les inserts (7).

20. Baie selon l'une quelconque des revendications précédentes,
**caractérisée**
**en ce que** dans un segment terminal du profilé de réception (6), au moins un coupleur d'alimentation (12) réalisé de manière protégée est disposé pour le dispositif d'alimentation électrique (7.4, 7.5), et
**en ce qu'**un connecteur d'alimentation (13) adapté au coupleur d'alimentation (12) avec un câble d'alimentation (14) raccordé au connecteur, est prévu.

21. Baie selon la revendication 20,
**caractérisée**
**en ce que** le coupleur d'alimentation (12) est réalisé sur, ou dans un module d'alimentation (15), et
**en ce que** l'on intègre dans le module d'alimentation (15) un élément de réseau pour la conversion ou adaptation de la tension, un limiteur de courant et/ou un dispositif de commutation pour l'activation séquentielle d'inserts (7) individuels.

22. Dispositif d'électrification pour un rack ou une armoire électrique avec un agencement selon la partie caractérisante de la revendication 1.

23. Dispositif d'électrification selon la revendication 22,
**caractérisé par** une configuration selon la partie caractérisante de l'une quelconque des revendications 2 à 22.
